# EUROPÄISCHE PATENTANMELDUNG

(11) **EP 1 744 293 A1**
(43) Veröffentlichungstag der Anmeldung: **17.01.2007**
(21) Anmeldenummer: 05015326.1
(22) Anmeldetag: 14.07.2005
(51) Int. Cl.: G09B 7/00

(54) **Datenverarbeitungssystem und Verfahren zum computergestützten Lernen**

(71) Anmelder: CompuGroup Holding AG, 56070 Koblenz (DE)
(72) Erfinder: Gotthardt, Frank, 56337 Eitelborn (DE)
(74) Vertreter: Richardt, Markus Albert

(57) **Zusammenfassung**

Die Erfindung betrifft ein Datenverarbeitungssystem mit
- Mitteln (118) zum Zugriff auf eine medizinische Fall-Datenbank (104),
- Mitteln (118, 120, 124; 136) zur Eingabe fallbezogener Daten in die Fall-Datenbank,
- Mitteln (118) zum Zugriff auf eine medizinische Fachfragen-Datenbank (110),
- Mitteln (118) zur Generierung einer Abfrage für die Fachfragen-Datenbank mit Hilfe der fallbezogenen Daten,
- Mitteln (118, 120; 150) zur Ausgabe einer durch die Abfrage erhaltenen Fachfrage,
- Mitteln (118, 120; 150, 154) zur Eingabe einer Antwort auf die Fachfrage,
- Mitteln (118) zur Auswertung der Antwort.

## Beschreibung

Die Erfindung betrifft ein Datenverarbeitungssystem, ein Verfahren zum computergestützten Lernen sowie ein entsprechendes Computerprogrammprodukt.

Aus dem Stand der Technik sind verschiedene computerimplementierte Lern- und Unterrichtsverfahren bekannt.

Die US 5,441,415 offenbart ein solches Verfahren, bei dem durch Überwachen des Lernfortschritts die Effizienz des individuellen Lernens verbessert werden soll, indem das Kursmaterial an die Fähigkeit des Lernenden angepasst wird. Hierzu wird interaktive Multimedia-Technologie mit einer Kursmaterialentwicklung kombiniert, um ein flexibles Unterrichtswerkzeug bereitzustellen.

Aus der DE 697 17 659 T2 ist ein weiteres computerimplementiertes Lemsystem bekannt, welches Testergebnisse analysiert, um die entsprechenden Kenntnislücken zu identifizieren und basierend hierauf einen personalisierten Lehrplan zu erzeugen.

Die ständige berufsbegleitende Aus- und Weiterbildung gewinnt in verschiedenen Bereichen zunehmend an Bedeutung.

Insbesondere für die Ärzteschaft ist die kontinuierliche medizinische Fortbildung ein unverzichtbarer Bestandteil des beruflichen Selbstverständnisses und als solche sogar in der Musterberufsordnung der Bundesärztekammer kodifiziert. Mit dem zum 1. Januar 2004 in Kraft getretenen Gesetz zur Modemisierung der gesetzlichen Krankenversicherung (GMG) wird für die Bundesrepublik Deutschland, die bislang auf freiwilliger Basis durchgeführte ärztliche Fortbildung verpflichtend eingeführt. Für die niedergelassenen Ärzte ist vorgesehen, alle fünf Jahre gegenüber der kassen-ärztlichen Vereinigung den Nachweis zu erbringen, dass sie in dem zurückliegenden Fünfjahreszeitraum ihrer Fortbildungspflicht nachgekommen sind. Wird dieser Fortbildungsnachweis nicht oder nicht vollständig erbracht, folgen Sanktionen, die über Honorarkürzungen bis zum Antrag auf Entziehung der Zulassung reichen.

Eine entsprechende Fortbildungsverpflichtung besteht auch für die im Krankenhaus tätigen Fachärzte. Dort wird ein Ausschuß damit beauftragt, Maßnahmen zur Qualitätssicherung in den Krankenhäusern zu beschließen, zu denen auch die im Abstand von fünf Jahren zu erfüllenden Fortbildungspflichten der Fachärzte gehören. Krankenhäuser, die nicht nachweisen können, dass ihr ärztliches Personal dieser Fortbildungspflicht nachgekommen ist, kann der Versorgungsvertrag gekündigt werden.

Die Ärztekammem stellen ein Fortbildungszertifikat aus, wenn innerhalb von drei Jahren 150 Fortbildungspunkte erworben und dokumentiert sind. Ein Fortbildungspunkt entspricht dabei in der Regel einer akademischen Stunde und kann in den von den Landesärztekammern zertifizierten Veranstaltungen erworben werden. Durch das Fortbildungszertifikat wird der Nachweis für die gesetzlich vorgeschriebene Fortbildung erbracht.

Ein Problem solcher Fortbildungsveranstaltungen ist, dass diese nicht zielgerichtet auf individuelle Kenntnislücken und die jeweiligen konkreten Tätigkeitsbereiche der Ärzte und Artzinnen ausgerichtet sein können und damit relativ ineffizient sind.

Der Erfindung liegt dem gegenüber die Aufgabe zu Grunde, ein Datenverarbeitungssystem, ein Verfahren zum computergestützten Lernen sowie ein entsprechendes Computerprogrammprodukt zu schaffen, welches insbesondere für die berufsbegleitende Fortbildung im medizinischen Bereich geeignet ist.

Durch die Erfindung wird ein Datenverarbeitungssystem mit Mitteln zum Zugriff auf eine medizinische Fall-Datenbank, Mitteln zur Eingabe fallbezogener Daten in die Fall-Datenbank, Mitteln zum Zugriff auf eine medizinische Fachfragen-Datenbank, Mitteln zur Generierung einer Abfrage für die Fachfragen-Datenbank mit Hilfe der fallbezogenen Daten, Mitteln zur Ausgabe einer durch die Abfrage erhaltenen Fachfrage, Mitteln zur Eingabe einer Antwort auf die Fachfrage und Mitteln zur Auswertung der Antwort geschaffen.

Erfindungsgemäß werden also die fallbezogenen Daten, die zum Beispiel ein Arzt während oder nach einer Behandlung eines Patienten eingibt, für die Auswahl einer Fachfrage aus einer Fachfragen-Datenbank verwendet. Dies hat den Vorteil, dass der behandelnde Arzt mit solchen Fachfragen konfrontiert wird, welche die von ihm behandelten medizinische Fälle betreffen bzw. welche für das von ihm abgedeckte medizinische Gebiet relevant sind.

Die Ausgabe einer mit Hilfe der fallbezogenen Daten ausgewählten Fachfrage kann zum Beispiel unmittelbar nach Eingabe der fallbezogenen Daten erfolgen. Beispielsweise kann der Arzt diese Fachfrage zwischen zwei Patiententerminen beantworten. Die ärztliche Fortbildung wird so ein integrativer Bestandteil des Praxis- bzw. Klinikablaufs.

Alternativ können die ausgewählten Fachfragen aber auch für eine spätere Beantwortung gespeichert werden. Zum Beispiel können die Fachfragen über eine Schnittstelle auf ein tragbares elektronisches Gerät, wie zum Beispiel einem Personal Digital Assistant (PDA), einen Laptop-Computer oder dergleichen, exportiert werden, so dass der Arzt diese Fachfragen zum Beispiel abends oder am Wochenende außerhalb seines Arbeitsplatzes bearbeiten kann.

Nach einer Ausführungsform der Erfindung ist das Datenverarbeitungssystem in die Praxis-EDV einer Arztpraxis oder in ein elektronisches Verwaltungssystem eines Krankenhauses integriert. Die Daten jedes Patienten sind in einer virtuellen Karteikarte erfasst. Anlässlich eines Arztbesuchs des Patienten bzw. einer ärztlichen Visite wird die virtuelle Karteikarte des Patienten geöffnet, so dass die aufgrund des Arztbesuchs bzw. aufgrund der ärztlichen Visite gewonnenen zusätzlichen fallbezogenen Daten des Patienten in die virtuelle Karteikarte eingetragen werden können. Bei diesen Daten handelt es sich zum Beispiel um Anamnese-, Diagnose-, Therapie- und / oder Verordnungsdaten.

Nach einer Ausführungsform der Erfindung wird nach Schließen der virtuellen Karteikarte, das heißt nach der Abspeicherung der ergänzenden fallbezogenen Daten, eine Abfrage der Fachfragen-Datenbank durchgeführt, wobei eine oder mehrere der fallbezogenen Daten, die in der virtuellen Karteikarte gespeichert sind, als Suchbegriffe für die Suche nach einer passenden Fachfrage verwendet werden.

Nach einer Ausführungsform der Erfindung ist jeder Fachfrage in der Fachfragen-Datenbank eine eindeutige Kennung zugeordnet. Falls der behandelnde Arzt die Fachfrage nicht sofort, sondern zu einem späteren Zeitpunkt beantworten möchte, so wird die entsprechende Fachfragenkennung gesondert gespeichert. Daraus resultiert eine Liste von Fachfragenkennungen, die in regelmäßigen oder unregelmäßigen Abständen von dem Arzt abzuarbeiten sind.

Nach einer Ausführungsform der Erfindung beinhaltet die Fachfragen-Datenbank zu jeder Fachfrage einen Verweis auf eine Datei mit einer Lerneinheit, die sich auf die Thematik der Fachfrage bezieht. Wird eine Fachfrage falsch beantwortet, so wird dem behandelnden Arzt die betreffende Lerneinheit zum sofortigen oder späteren Durcharbeiten angeboten.

Die Fachfragen können auch in verschiedene Kategorien eingeteilt sein. Jeder Kategorie von Fachfragen sind dann eine oder mehrere Lerneinheiten zugeordnet. Wenn der Arzt in einer bestimmten Kategorie nicht einen bestimmten Mindestprozentsatz von richtig beantworteten Fragen erreicht, werden ihm eine oder mehrere dieser Lemeinheiten, welche der betreffenden Kategorie von Fachfragen zugeordnet sind, zur sofortigen oder späteren Bearbeitung angeboten.

In einem weiteren Aspekt betrifft die Erfindung ein Verfahren zum computergestützten Lernen. Das Verfahren beinhaltet die folgenden Schritte: Eingabe fallbezogener Daten in eine Fall-Datenbank, Verwendung einer oder mehrerer der fallbezogenen Daten zur Abfrage einer Fachfragen-Datenbank, Ausgabe der durch Abfrage der Fachfragen-Datenbank erhaltenen Fachfrage und Auswertung einer auf die Fachfrage eingegebenen Antwort..

In einem weiteren Aspekt betrifft die Erfindung ein Computerprogrammprodukt, insbesondere ein digitales Speichermedium, zur Durchführung eines solchen Verfahrens. Ein entsprechendes Computerprogramm kann zum Beispiel auf einem Personal Computer oder einem tragbaren elektronischen Gerät ausgeführt werden. Es kann auch in einer Netzwerkumgebung, wie zum Beispiel einer Client-Server-Architektur, ausgeführt werden. Femer ist auch eine Implementierung als verteiltes Datenverarbeitungssystem zum Beispiel unter Einbeziehung öffentlicher Netzwerke, wie zum Beispiel dem Internet, möglich. Beispielsweise können die Fachfragen-Datenbank und / oder die Lerneinheitenen über ein oder mehrere Web-Services zur Verfügung gestellt werden.

Ferner ist es auch möglich, medizintechnische Geräte mit dem erfindungsgemäßen Datenverarbeitungssystem zu vernetzen. Die von solchen medizintechnischen Geräten gelieferten fallbezogenen Daten können mit in die Auswahl der Fachfragen eingehen.

Im weiteren werden Ausführungsbeispiele der Erfindung anhand der Zeichnungen näher erläutert. Es zeigen:
- Figur 1: ein Blockdiagramm einer ersten Ausführungsform eines erfindungsgemäßen Datenverarbeitungssystems,
- Figur 2: ein Flussdiagramm einer Ausführungsform eines erfindungsgemäßen Verfahrens,
- Figur 3: eine virtuelle Patientenkarteikarte zur Eingabe fallbezogener Daten,
- Figur 4: ein Fenster einer graphischen Benutzerschnittstelle zur Ausgabe einer fallbezogenen Frage und zur Eingabe einer Antwort auf die Frage im Multiple-Choice-Verfahren,
- Figur 5: ein Flussdiagramm einer weiteren Ausführungsform eines erfindungsgemäßen Verfahrens.

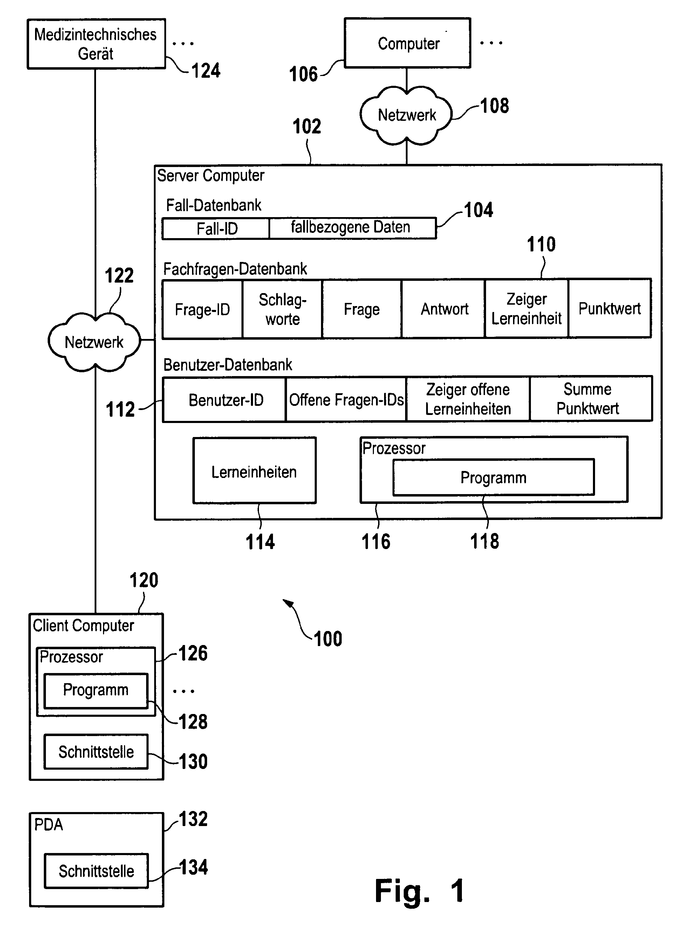

Die Figur 1 zeigt ein Datenverarbeitungssystem 100 mit einem Server-Computer 102. In dem Server-Computer 102 ist eine Fall-Datenbank 104 gespeichert. Die Fall-Datenbank 104 beinhaltet für jeden gespeicherten medizinischen Fall fallbezogene Daten und eine den betreffenden medizinischen Fall eindeutig identifizierende Kennung, das heißt eine Fall-ID. Unter einem medizinischen Fall wird hier beispielsweise eine Abfolge von zusammenhängenden medizinischen Maßnahmen im Rahmen einer ambulanten und / oder stationären Versorgung eines Patienten verstanden, die virtuelle Karteikarte eines Patienten mit dessen medizinischen Daten und/ oder die komplette elektronische Patientenakte des Patienten.

Statt auf dem Server-Computer 102 kann die Fall-Datenbank 104 auch ganz oder teilweise auf ein oder mehreren externen Computern 106 gespeichert sein, auf die der Server-Computer 102 über das Netzwerk 108, wie zum Beispiel das Intemet, zugreifen kann.

Auf dem Server-Computer 102 kann ferner eine Fachfragen-Datenbank 110 gespeichert sein. Die Fachfragen-Datenbank beinhaltet verschiedene Fachfragen. Diese können kategorisiert sein und / oder verschlagwortet. Die Schlagworte sind gegebenenfalls in der Fachfragen-Datenbank 110 als Suchbegriffe für die Auswahl von Fachfragen abgespeichert.

Jeder der Fachfragen ist eine eindeutige Kennung, das heißt einer Frage-ID, zugeordnet. Bei Verwendung eines Multiple-Choice-Verfahrens sind für jede Fachfrage mehrere Antworten gespeichert, von denen eine oder mehrere richtig sind. Jeder Fachfrage ist ferner ein Punktwert zugeordnet, der dem Bearbeiter bei richtiger Beantwortung gut geschrieben wird. Ferner ist jeder Fachfrage ein Zeiger auf eine Lerneinheit zugeordnet, die Unterrichtsmaterial betreffend die Thematik der Fachfrage beinhaltet.

Die Fachfragen-Datenbank 110 kann auch ganz oder teilweise auf einem der externen Computer 106 gespeichert sein.

Auf dem Server-Computer 102 kann ferner eine Benutzer-Datenbank 112 gespeichert sein. Die Benutzer-Datenbank 112 beinhaltet für jeden registrierten Benutzer eine eindeutige Kennung, das heißt eine Benutzer-ID. Jeder Benutzer-ID können ein oder mehrere Fragen-IDs zugeordnet sein, welche offene Fachfragen der Fachfragen-Datenbank 110 identifizieren, welche der betreffende Benutzer noch zu bearbeiten hat. Ferner können jeder Benutzer-ID ein oder mehrere Zeiger auf Lerneinheiten zugeordnet sein, die der betreffende Benutzer noch durchzuarbeiten hat. Darüber hinaus kann jeder Benutzer-ID ein aufsummierter Punktwert zugeordnet sein, der aufgrund der korrekten Beantwortung von Fachfragen bzw. der Bearbeitung von Lerneinheiten erworben worden ist. Auch die Benutzer-Datenbank 112 kann ganz oder teilweise extern auf einem der Computer 106 gespeichert sein.

Entsprechendes gilt für die Lerneinheiten, die lokal in einem Speicher 114 des Server-Computers 112 oder ganz oder teilweise auf einem der externen Computer 106 gespeichert sein können. Bei den Lerneinheiten kann es sich um textuelle Dokumente, multimediales und/oder interaktives Lernmaterial handeln.

Der Server-Computer 102 hat ferner mindestens einen Prozessor 116 zur Ausführung eines Programms 118.

Ein Client-Computer 120 ist über ein Netzwerk 122, wie zum Beispiel ein Ethernet mit dem Server-Computer 102 verbindbar. Über dasselbe Netzwerk 122 können auch ein oder mehrere medizintechnische Geräte 124 mit dem Server-Computer 102 und / oder dem Client-Computer 120 verbindbar sein. Typischerweise sind mehrere Client-Computer 120 für die verschiedenen Arbeitsplätze zum Beispiel in einer Gemeinschaftspraxis, einem Krankenhaus oder einer anderen medizinischen Einrichtung über das Netzwerk 122 mit dem Server-Computer 102 und / oder dem zumindest einem medizintechnischen Gerät 124 verbindbar.

Der Client-Computer 120 hat zumindest einen Prozessor 126 zur Ausführung eines Programms 128. Femer kann der Client-Computer 120 eine Schnittstelle 130 zum Austausch von Daten mit einem tragbaren elektronischen Gerät, wie zum Beispiel einem PDA 132 verfügen, der eine entsprechende Schnittstelle 134 hat. Die Schnittstellen 130, 134 können für eine kontaktbehaftete oder eine drahtlose Kommunikation ausgebildet sein. Zum Beispiel kann es sich bei den Schnittstellen 130, 134 um eine BlueTooth-Schnittstelle oder dergleichen handeln.

Im Betrieb logt sich der Benutzer des Client-Computers 120 zunächst mit seiner Benutzer-ID als Kennung ein. Bei dem Benutzer kann es sich zum Beispiel um den behandelnden Arzt eines Patienten handeln.

Anläßlich eines Behandlungstermins des Patienten öffnet der behandelnde Arzt durch Eingabe der Patienten-Kennung, das heißt der Fall-ID, die virtuelle Patientenkarteikarte des Patienten, die die entsprechenden fallbezogenen Daten aus der Fall-Datenbank 104 des Patienten beinhaltet. Der Arzt kann dann zusätzliche, während des Behandlungstermins gewonnene fallbezogene Daten des Patienten mittels des Programms 128 durch manuelle Eingabe in der Fall-Datenbank 104 abspeichern und / oder durch unmittelbare Übertragung der ergänzenden fallbezogenen Daten von dem medizintechnischen Gerät 124 über das Netzwerk 122 in die Fall-Datenbank 104 laden. Beispielsweise kann es sich bei dem medizintechnischem Gerät 124 um ein bildgebendes Gerät handeln, welches Dateien im Format DICOM erzeugt, die neben den Bilddaten auch textuelle Informationen beinhalten.

Das Programm 118 verwendet die von dem Client-Computer 120 empfangenen fallbezogenen Daten und / oder die von dem medizintechnischen Gerät 124 empfangenen fallbezogenen Daten und / oder die bereits zuvor in der Fall-Datenbank 104 für den betreffenden Patienten abgespeicherten fallbezogenen Daten, um eine Suchabfrage für die Fachfragen-Datenbank 110 zu generieren. Hierzu kann das Programm 118 ein oder mehrere der fallbezogenen Daten zufällig oder nach einem vorgegebenen Regelwerk auswählen um hiermit in den Fragen, die in der Fachfragen-Datenbank 110 gespeichert sind oder in den Schlagworten der Fachfragen zu suchen. Diese Suche kann als Suche in strukturierten Datensätzen oder als Suche in unstrukturierten Daten nach Art einer Suchmaschine implementiert sein.

Eine von dem Programm 118 aus der Fachfragen-Datenbank 110 aufgrund der Suchabfrage erhaltene Fachfrage wird über das Netzwerk 122 an den Client-Computer 120 übertragen, und dort von dem Programm 128 angezeigt. Femer werden auch die zu der Fachfrage gehörenden Multiple-Choice-Antworten ausgegeben.

Der behandelnde Arzt kann dann unmittelbar die Frage beantworten. Wird die Frage richtig beantwortet, so wird der in der Benutzer-Datenbank 112 für den Arzt gespeicherte Punktwert um den Punktwert der Frage, der in der Fachfragen-Datenbank 110 gespeichert ist, erhöht. Wird dagegen die Frage falsch beantwortet, so kann dem behandelnden Arzt eine Lerneinheit angeboten werden, und zwar zur sofortigen oder späteren Bearbeitung. Entscheidet sich der Arzt für eine spätere Bearbeitung, so wird ein Zeiger auf die zu bearbeitende Lerneinheit in der Benutzer-Datenbank 112 für den behandelnden Arzt abgespeichert. Ebenso kann sich der behandelnde Arzt dafür entscheiden, dass die Fachfrage nicht unmittelbar nach dem Behandlungstermin, sondern zu einem späteren Zeitpunkt beantwortet werden soll. In diesem Fall wird die Fragen-ID der noch zu beantwortenden Fachfrage in der Benutzer-Datenbank 112 für den betreffenden Arzt gespeichert.

Beispielsweise am Ende eines Arbeitstages oder vor dem Wochenende synchronisiert der behandelnde Arzt seinen PDA 132 mit den für ihn gespeicherten Eintragungen in der Benutzer-Datenbank 112 über die Schnittstellen 130, 134. Beispielsweise werden die durch die offenen Fragen-IDs in der Benutzer-Datenbank 112 identifizierten Fachfragen und deren Multiple-Choice-Antworten auf den PDA 132 übertragen und / oder die durch die Zeiger auf die offenen Lerneinheiten in der Benutzer-Datenbank 112 identifizierten Lerneinheiten. Alternativ können auch lediglich die offenen Fragen-IDs und / oder die Zeiger auf die offenen Lerneinheiten auf den PDA 132 gespeichert werden.

Wenn der Arzt dann zu einem späteren Zeitpunkt eine offene Frage oder eine offene Lerneinheit bearbeiten möchte, sendet der PDA 132 eine HTTP-Anforderung, zum Beispiel an den Server-Computer 102 oder einen der Computer 106, wobei in der Anforderung zumindest eine Fragen-ID einer offenen Frage und / oder ein Zeiger, wie zum Beispiel eine URL, auf eine offene Lerneinheit beinhaltet ist.

Daraufhin werden die angeforderten Daten zu dem PDA 132 übertragen, so dass der Arzt die offene Frage bzw. die offene Lerneinheit bearbeiten kann. Nach Rückkehr des Arztes an seinen Arbeitsplatz kann wiederum eine Synchronisation mit dem PDA 132 erfolgen. Hierzu wird über die Schnittstellen 130, 134 die Information von dem PDA 132 an den Client-Computer 120 und über das Netzwerk 122 an den Server-Computer 102 übertragen, welche der offenen Fragen zutreffend und welche unzutreffend beantwortet worden sind und / oder welche offenen Lerneinheiten bearbeitet worden sind. Mit Hilfe dieser Information wird die Benutzer-Datenbank 112 aktualisiert, das heißt es werden die offenen Fragen-IDs der zwischenzeitlich bearbeiteten Fragen und / oder die Zeiger auf die zwischenzeitlich bearbeiteten offenen Lerneinheiten gelöscht und der aufsummierte Punktwert entsprechend erhöht. Hat der Arzt Fragen falsch beantwortet, so werden die entsprechenden Zeiger dann zusätzlich zu bearbeitende Lerneinheiten ergänzt.

Das Programm 118 kann verschiedene Betriebsmodi aufweisen, die der Benutzer als sogenannte User Settings mittels des Programms 128 von seinem Client-Computer 120 aus einstellen kann. Beispielsweise kann über die User Settings festgelegt werden, dass immer nach dem Schließen einer virtuellen Patientenkarteikarte eine Fachfrage ermittelt und zur Beantwortung angezeigt wird. Einem behandelnden Arzt werden also immer zwischen zwei Behandlungsterminen ein oder mehrere Fachfragen, die sich auf den zuvorigen Behandlungstermin beziehen, zur Beantwortung gestellt. Alternativ kann über die User Settings auch festgelegt werden, dass die Fachfragen nicht zwischen den Behandlungsterminen nach jeder Schließung einer virtuellen Patientenkartei gestellt werden, sondern dass die offenen Fragen zunächst in der Benutzer-Datenbank 112 gesammelt werden, so dass sie der betreffende Arzt zu einem späteren Zeitpunkt bearbeiten kann. Entsprechendes gilt für die Lemeinheiten.

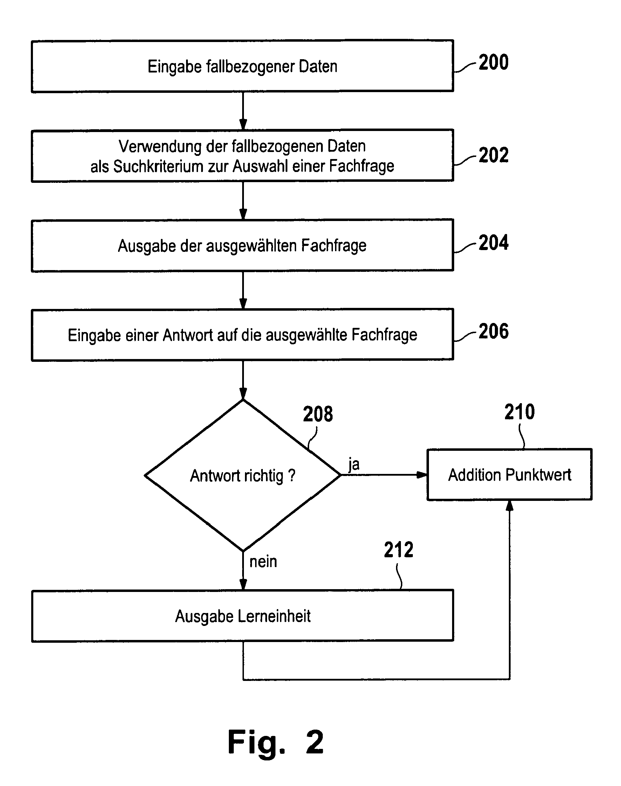

Die Figur 2 zeigt ein entsprechendes Flussdiagramm. In dem Schritt 200 werden fallbezogene Daten, beispielweise eines Patienten, in ein Praxis-EDV-System bzw. in ein elektronisches Verwaltungssystem eines Krankenhauses oder einer anderen medizinischen Einrichtung eingegeben. Alternativ oder zusätzlich erfolgt die Eingabe der fallbezogenen Daten unmittelbar von einem medizintechnischen Gerät, mit Hilfe dessen der betreffende Patient untersucht worden ist.

In dem Schritt 202 werden die fallbezogenen Daten als Suchkriterium zur Auswahl einer Fachfrage aus einer Fachfragen-Datenbank verwendet. Beispielsweise kann die Art der von dem medizintechnischen Gerät gelieferten Daten als Suchkriterium dienen und / oder diagnostische und / oder therapeutische Informationen, die der behandelnde Arzt eingegeben hat.

In dem Schritt 204 wird die aufgrund der Suche ermittelte Fachfrage aus der Fachfragen-Datenbank ausgegeben und zur Beantwortung angezeigt. In dem Schritt 206 wird eine Antwort auf die Fachfrage eingegeben. Dies kann beispielsweise über ein Multiple-Choice-Verfahren oder durch textuelle Beantwortung der Fachfrage erfolgen. Die Antwort kann über die Tastatur, durch einen Mausklick oder durch Spracheingabe eingegeben werden.

In dem Schritt 208 wird die Antwort ausgewertet und entschieden, ob die Antwort richtig oder falsch ist. Falls die Antwort richtig ist, wird in dem Schritt 210 der für den betreffenden Benutzer gespeicherte Punktwert um den der Fachfrage in der Fachfragen-Datenbank zugeordnetem Punktwert erhöht. Ist die Fachfrage dagegen falsch beantwortet worden, so wird in dem Schritt 212 die der falsch beantworteten Fachfrage zugeordnete Lerneinheit ausgegeben und dem betreffenden Benutzer zur Bearbeitung angeboten. Nach Bearbeitung der Lerneinheit geht dann die Ablaufsteuerung zu dem Schritt 210, wo der Punktwert entsprechend erhöht wird.

Nach Erreichung einer vordefinierten Mindestpunktzahl von zum Beispiel 150 Fortbildungspunkten kann automatisch ein Ausdruck eines Zertifikats erfolgen, welches als Nachweis für die Durchführung einer verpflichtenden Fortbildung verwendet werden kann.

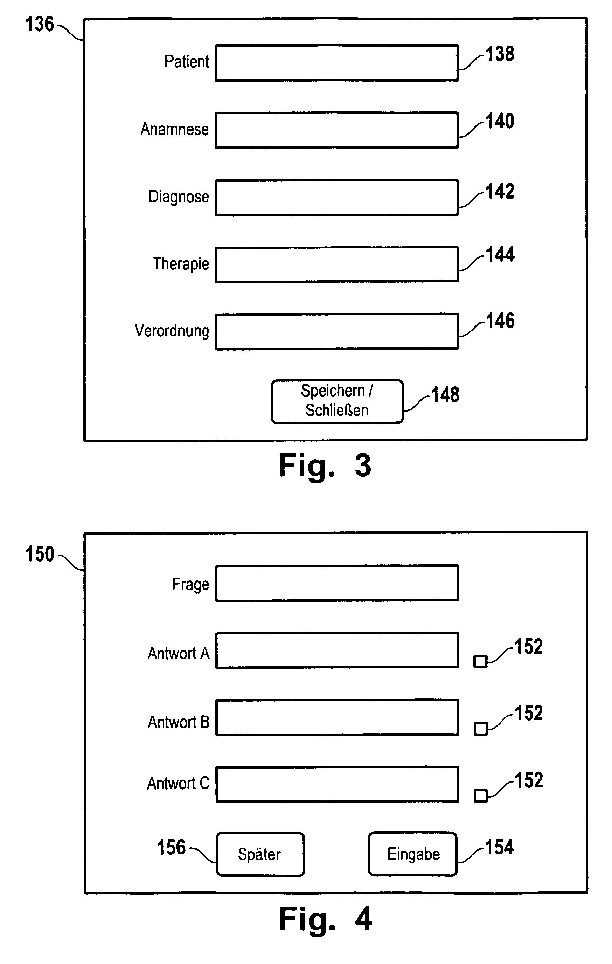

Die Figur 3 zeigt ein Eingabefenster 136, wie es in dem Datenverarbeitungssystem 100 für die Eingabe von fallbezogenen Daten verwendet werden kann. Das Eingabefenster 136 hat ein Eingabefeld 138 zur Eingabe von den Patienten identifizierenden Daten, wie zum Beispiel des Patientennamens und / oder der Fall-ID des Patienten, das heißt einer Patienten-Kennung, ein Eingabefeld 140 zur Eingabe von Anamnesedaten, ein Eingabefeld 142 zur Eingabe von Diagnosedaten, ein Eirtgabefeld 144 zur Eingabe von Therapiedaten und ein Eingabefeld 146 zur Eingabe von Verordnungsdaten. Nachdem der Benutzer solche fallbezogenen Daten in das Eingabefenster 136 eingegeben hat, wird die Sitzung durch Klicken auf das virtuelle Bedienelement 148 des Eingabefensters 136 beendet, das heißt das Eingabefenster 136 wird geschlossen und die in das Eingabefenster 136 zuvor eingegebenen fallbezogenen Daten werden in der Fall-Datenbank gespeichert.

Daraufhin wird eine Fachfrage mit Hilfe der zuvor eingegebenen fachbezogenen Daten aus der Fachfragen-Datenbank durch eine Suchabfrage ermittelt. Diese Frage und die dazugehörigen Multiple-Choice-Antworten werden auf einem Ausgabefenster 150 ausgegeben. In dem hier betrachteten Beispielsfall gehören zu der Fachfrage drei mögliche Antworten A, B, C, die durch Anklicken von einer oder mehrerer der Ankreuzkästchen (sogenannte Check Boxes) 152 als richtig ausgewählt werden können. Nach der Auswahl der richtigen Antwort bzw. der richtigen Antworten kann der Benutzer auf das virtuelle Bedienelement 154 klicken, womit die Beantwortung der Fachfrage in das Datenverarbeitungssystem eingegeben wird. Alternativ kann der Benutzer auf das virtuelle Bedienelement 156 klicken, um die gestellte Fachfrage zu einem späteren Zeitpunkt zu beantworten.

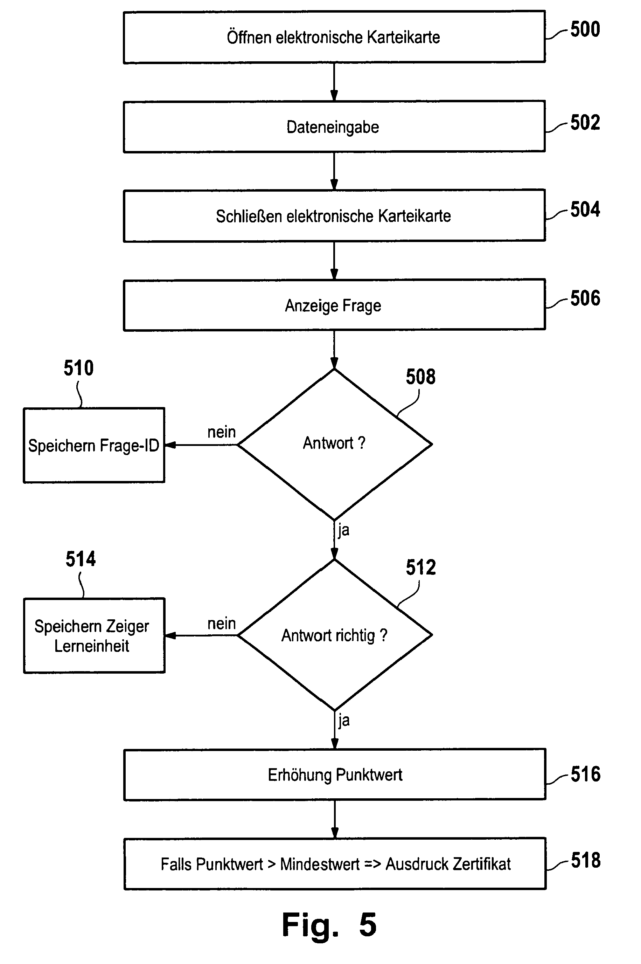

Die Figur 5 zeigt eine weitere Ausführungsform eines erfindungsgemäßen Verfahrens.

In dem Schritt 500 wird die elektronische Karteikarte eines zu behandelnden Patienten geöffnet. In dem Schritt 502 werden zum Beispiel durch Untersuchung des Patienten gewonnene ergänzende fallbezogene Daten, wie zum Beispiel diagnostische, therapeutische und / oder Verordnungsdaten in die elektronische Karteikarte eingegeben. In dem Schritt 504 wird die elektronische Karteikarte nach Beendigung des Behandlungstermins geschlossen.

Daraufhin wird in dem Schritt 506 eine Fachfrage angezeigt, die aufgrund der zuvor eingegebenen fallbezogenen Daten ausgewählt worden ist. In dem Schritt 508 wird festgestellt, ob der Benutzer eine Beantwortung der Fachfrage zum jetzigen Zeitpunkt wünscht oder nicht. Ist eine spätere Beantwortung gewünscht, so wird die Kennung der Fachfrage, das heißt die Fragen-ID, in dem Schritt 510 gespeichert. Wird dagegen die Fachfrage beantwortet, so wird in dem Schritt 512 überprüft, ob die Beantwortung zutreffend ist. Ist das nicht der Fall, so wird in dem Schritt 514 ein Zeiger auf die der Fachfrage zugeordnete Lerneinheit gespeichert.

War die Beantwortung zutreffend, wird in dem Schritt 516 der dem betreffenden Benutzer zugeordnete Punktwert um den der Frage zugeordneten Punktwert erhöht. In dem Schritt 518 wird sodann ein Zertifikat ausgedruckt, falls der dem Benutzer zugeordnete akkumulierte Punktwert einen Mindestwert erreicht oder überschreitet.

Die in den Schritten 510 und 514 gespeicherten Fragen-IDs bzw. Zeiger auf Lerneinheiten können zu einem späteren Zeitpunkt abgerufen werden, so dass der Benutzer die offenen Fragen bzw. die offenen Lerneinheiten beispielsweise in seiner Freizeit oder am Wochenende bearbeiten kann.

### Bezugszeichenliste

- 100: Datenverarbeitungssystem
- 102: Server-Computer
- 104: Fall-Datenbank
- 106: Computer
- 108: Netzwerk
- 110: Fachfragen-Datenbank
- 112: Benutzer-Datenbank
- 114: Speicher
- 116: Prozessor
- 118: Programm
- 120: Client-Computer
- 122: Netzwerk
- 124: medizintechnisches Gerät
- 126: Prozessor
- 128: Programm
- 130: Schnittstelle
- 132: PDA
- 134: Schnittstelle
- 136: Eingabefenster
- 138: Eingabefeld
- 140: Eingabefeld
- 142: Eingabefeld
- 144: Eingabefeld
- 146: Eingabefeld
- 148: Bedienelement
- 150: Ausgabefenster
- 152: Check Box
- 154: Bedienelement

## Patentansprüche

1. Datenverarbeitungssystem mit
- Mitteln (118) zum Zugriff auf eine medizinische Fall-Datenbank (104),
- Mitteln (118, 120, 124; 136) zur Eingabe fallbezogener Daten in die Fall-Datenbank,
- Mitteln (118) zum Zugriff auf eine medizinische Fachfragen-Datenbank (110),
- Mitteln (118) zur Generierung einer Abfrage für die Fachfragen-Datenbank mit Hilfe der fallbezogenen Daten,
- Mitteln (118, 120; 150) zur Ausgabe einer durch die Abfrage erhaltenen Fachfrage,
- Mitteln (118, 120; 150, 154) zur Eingabe einer Antwort auf die Fachfrage,
- Mitteln (118) zur Auswertung der Antwort.

2. Datenverarbeitungssystem nach Anspruch 1, wobei die Fall-Datenbank für jeden Patienten eine virtuelle Karteikarte zur Eingabe der fallbezogenen Daten des betreffenden Patienten beinhaltet.

3. Datenverarbeitungsanlage nach Anspruch 2, wobei die Abfrage nach Schließen der virtuellen Karteikarte generiert wird.

4. Datenverarbeitungsanlage nach Anspruch 1, 2 oder 3, wobei es sich bei den fallbezogenen Daten um Anamnesedaten, Diagnosedaten, Therapiedaten und / oder Verordnungsdaten handelt und ein oder mehrere dieser Daten für die Abfrage verwendet werden.

5. Datenverarbeitungssystem nach einem der vorhergehenden Ansprüche, wobei die Fachfragen-Datenbank zu jeder Fachfrage eine Fachfragen-Kennung als Zugriffsschlüssel beinhaltet und mit Mitteln zur Speicherung einer Fachfragen-Kennung, wenn auf die entsprechende Fachfrage nach der Ausgabe keine Antwort eingegeben wird.

6. Datenverarbeitungssystem nach Anspruch 5, mit einer Schnittstelle (130) für ein tragbares elektronisches Gerät (132) zur Übertragung der gespeicherten Fachfragen-Kennungen und / oder der entsprechenden Fachfragen an das tragbare Gerät.

7. Datenverarbeitungssystem nach einem der vorhergehenden Ansprüche, wobei die Fachfragen-Datenbank zu jeder Fachfrage einen Verweis auf eine Datei mit einer Lerneinheit beinhaltet.

8. Verfahren zum computergestützten Lernen mit folgenden Schritten:
- Eingabe fallbezogener Daten in eine Fall-Datenbank (104),
- Verwendung einer oder mehrerer der fallbezogenen Daten zur Abfrage einer Fachfragen-Datenbank (110),
- Ausgabe der durch Abfrage der Fachfragen-Datenbank erhaltenen Fachfrage,
- Auswertung einer auf die Fachfrage eingegebenen Antwort.

9. Verfahren nach Anspruch 8, wobei eine Datei mit Lerninhalten zur Verfügung gestellt wird, falls die Fachfrage falsch beantwortet worden ist.

10. Computerprogrammprodukt, insbesondere digitales Speichermedium, mit computerausführbaren Instruktionen zur Ausführung eines Verfahrens nach Anspruch 8 oder 9.
